# EUROPÄISCHE PATENTSCHRIFT

(11) **EP 2 288 120 B1**
(45) Veröffentlichungstag und Bekanntmachung des Hinweises auf die Patenterteilung: **10.07.2013**
(21) Anmeldenummer: 10173300.4
(22) Anmeldetag: 18.08.2010
(51) Int. Cl.: H04M 1/06

(54) **Optisches Umschaltungssystem für einen Fernsprechapparat, Fernsprechapparat und Verfahren zum Einbau eines Umschaltungssystems in einen Fernsprechapparat**
Optical switching system for a telephone, telephone and method for installing a switching system into a telephone
Système de commutation optique pour un appareil téléphonique, appareil téléphonique et procédé d'intégration d'un système de commutation dans un appareil téléphonique

(30) Priorität: 18.08.2009 DE 102009037777
(43) Veröffentlichungstag der Anmeldung: 23.02.2011
(73) Patentinhaber: Gigaset Communications GmbH, 81379 München (DE)
(72) Erfinder: Göring, Klaus, 46399, Bocholt (DE); Müller, Heinz-Dieter, 46446, Emmerich (DE); Wewers, Otger, 46395, Bocholt (DE)
(74) Vertreter: Michalski Hüttermann & Partner Patentanwälte

(56) Entgegenhaltungen:
- JP-A- 4 057 551
- JP-A- 62 226 748
- US-A- 4 847 900

## Beschreibung

Die Erfindung betrifft ein optisches Umschaltungssystem für einen Fernsprechapparat, einen Fernsprechapparat sowie ein Verfahren zum Einbau eines Umschaltungssystems in einen Fernsprechapparat.

Umschaltungssysteme für Fernsprechapparate sind allgemein bekannt. Beispielsweise sind mechanische Gabelumschalter bekannt, bei denen sich im Bereich einer Hörermulde des Fernsprechapparates ein plattenförmiges, ringförmiges oder stegförmiges Element aus Metall oder Kunststoff befindet, das über ein Hebelsystem bei Auflegen eines Hörers des Fernsprechapparates einen elektromechanischen Schalter im Innern des Fernsprechapparates betätigt. Beim Abnehmen des Hörers wird, im Regelfall über eine Federspannung, diese mechanische "Wippe" wieder in Ausgangsstellung gebracht.

Des Weiteren sind elektrische/elektromagnetische Umschaltungssysteme für Fernsprechapparate bekannt. Diese Umschaltungssysteme nutzen das elektromagnetische Prinzip aus, um elektrische Schaltungszustände zu erreichen. Hierfür werden beispielsweise Hall-Schalter oder Reed-Kontakte verwendet.

Des Weiteren ist es bekannt, optische Umschaltungssysteme in Fernsprechapparaten einzusetzen. Üblicherweise werden Sende- und Empfangsdioden im Bereich der Hörermulde des Fernsprechapparates so platziert, dass eine Lichtschranke aufgebaut ist, die erkennt, ob der Hörer in der Hörermulde liegt oder abgenommen ist.

Vorteil eines optischen Systems im Vergleich zum mechanischen System ist das Fehlen von sich bewegenden und verschleißenden mechanischen Teilen. Ein weiterer Vorteil ist, die größere Gestaltungsfreiheit durch die in der Regel kleinen Sichtfenster der Lichtschranke in der Hörermulde. Bei einem mechanischen System hingegen ist die relativ große mechanische Wippe designerisch zu berücksichtigen.

Ein zusätzlicher Vorteil ist, dass aufgrund der vermiedenen Gehäuseöffnungen bzw. Gehäusespalten der Raum im Bereich des Gabelumschalters als Rückkammervolumen eines eventuell vorhandenen Gerätelautsprechers genutzt werden kann.

Der Vorteil eines optischen Systems im Vergleich zum elektromagnetischen System ist die geringere Störanfälligkeit. Andere in der Umgebung befindliche metallische Materialien können ein magnetisches System potentiell stören. Ein optisches System hingegen kann robust gegenüber Fremd- und Streulicht aufgebaut werden. Auch kann bei einem optischen System der Hörer in jeder Lage in die Hörermulde eingelegt werden. Bei einem magnetischen System beispielsweise mit einem Reed-Kontakt muss die Magnetseite immer zur Reed-Kontaktseite liegen.

JP 4 057551 A beschreibt die optische Detektion eines Hörers bei einem Telefon unter Verwendung eines lichtaussendenden Elements und eines lichtempfangenden Elements, welche auf gegenüberliegenden Seiten der Hörermulde angeordnet sind, wobei bei aufliegendem Hörer die Lichtstrom zwischen lichtaussendendem und lichtempfangendem Element unterbrochen wird. Durch die Vermeidung von mechanischen Elementen soll eine sichere Erkennung des Hörers gewährleistet werden.

JP 62 226748 A beschreibt die optische Detektion eines Hörers bei einem Telefon unter Verwendung einer Infrarot-Leuchtdiode und einem Infrarot-Fototransistor, wobei ein aufliegender Hörer den Lichtstrom zwischen Infrarot-Leuchtdiode und Infrarot-Fototransistor unterbricht bzw. ein abgenommener Hörer den Lichtstrom freigibt. Über einen mit dem Fototransistor verbundenen Transistor wird eine Relais-Spule angesteuert, die wiederum Kontakte schaltet. Hierdurch soll eine sichere Erkennung des Hörers gewährleistet und eine Miniaturisierung des Gerätes ermöglicht werden.

US 4 847 900 A beschreibt die Nutzung der in einem optischen Gabelumschalter verwendeten lichtaussendenden und lichtempfangenden Elemente zur Übertragung von Daten von und zum Telefon mittels eines an Stelle des Hörers aufgelegten Infrarot-Kopplers. Das lichtaussendende und das lichtempfangende Element des Telefons sind dabei so angeordnet, dass, wenn der Hörer abgehoben ist, das Licht des lichtaussenden Elements auf das lichtempfangende Element füllt.

Bezüglich des Aufbaus und des Montageprozesses sind die bekannten optischen Umschaltungssysteme sehr aufwändig gestaltet. Es werden vollständige Lichtschrankenmodule verwendet, die üblicherweise aus mindestens einem Kunststoffträger, den Sende- und Empfangsdioden und einem Kabelbaum zur elektrischen Kontaktierung bestehen. Derartige Lichtschrankenmodule müssen kostenintensiv vorkonfektioniert werden. Das Verbinden mit der elektrischen Baugruppe des Fernsprechapparates kann nicht automatisiert erfolgen, sondern erfordert einen manuellen Steckvorgang.

Aufgabe der vorliegenden Erfindung ist es, einen Fernsprechapparat mit einem optischen Umschaltungssystem zu schaffen, wobei das Umschaltesystem kostengünstig hergestellt und einfach an unterschiedliche Fernsprechapparate angepasst werden kann, und welches sich maschinell in einen Fernsprechapparat einbauen lässt. Eine weitere Aufgabe der Erfindung ist es, ein Verfahren zur Herstellung eines Fernsprechapparates zur Verfügung zu stellen.

Diese Aufgaben werden durch einen Fernsprechapparat mit einem optischen Umschaltesystem und ein Verfahren zur Herstellung eines Fernsprechapparates gemäß den unabhängigen Ansprüchen gelöst.

Vorteilhafte Weiterbildungen sind Gegenstände der abhängigen Ansprüche.

Der erfindungsgemäße Fernsprechapparat mit einem optischen Umschaltungssystem umfasst einen abnehmbaren Hörer, eine Hörermulde zur Ablage des Hörers, wobei die Hörermulde eine Eintrittsöffnung aufweist, durch die Licht in die Hörermulde eingeleitet werden kann, und eine Austrittsöffnung aufweist, durch die in die Hörermulde eingeleitetes Licht aufgenommen werden kann, ein Sendemittel zum Senden von Licht und ein Detektormittel zum Empfangen zumindest eines Teils des gesendeten Lichts, einen Lichtleiter zum Leiten von Licht vom Sendemittel zur Eintrittsöffnung der Hörermulde und/oder von der Austrittsöffnung der Hörermulde zum Detektormittel, wobei der Lichtleiter und das Sendemittel und/oder das Detektormittel als getrennte Baueinheiten ausgebildet sind, die getrennt voneinander in den Fernsprechapparat zur Ausbildung einer Lichtschranke einbaubar sind, wobei mit der Lichtschranke ein Abnehmen des Hörers erkennbar ist.

Durch die Trennung von Lichtleitmittel und Sendemittel und/oder Detektormittel entfällt eine aufwändige Vorkonfektionierung des optischen Umschaltungssystems. Lichtleitmittel, Sendemittel und Detektormittel können getrennt voneinander in den Fernsprechapparat eingebaut werden. Ein solcher Einbau kann insbesondere maschinell im Rahmen eines vollautomatisierten Prozesses erfolgen. Die voneinander getrennten Komponenten Lichtleiter und Dioden sind kostengünstig beziehbar oder herstellbar, das Sendemittel und das Detektormittel beispielsweise als SMD-Bauelement ausgebildete Dioden und das Lichtleitmittel als einfaches, thermoplastisches Spritzteil. Des Weiteren ist es nicht notwendig, einer Designänderung des Fernsprechapparates ein teures Modul zu ändern, lediglich eine Anpassung des Lichtleitmittels ist erforderlich.

Das erfindungsgemäße Verfahren zur Herstellung eines Fernsprechapparates enthält die Schritte, dass in einem ersten Schritt der Lichtleiter auf der Rückseite der Hörermulde angeordnet wird, und in einem vom ersten getrennten zweiten Schritt das Sendemittel und/oder das Detektormittel auf einer elektronischen Baugruppe des Fernsprechapparates angeordnet wird. Die Reihenfolge der Schritte ist beliebig wählbar.

Die Erfindung wird im Folgenden anhand von Ausführungsbeispielen, die durch Figuren dargestellt sind, näher erläutert. Dabei zeigt:
Fig. 1 eine perspektivische Ansicht einer Ausführungsform eines erfindungsgemäßen Fernsprechapparates,
Fig.2 eine perspektivische Ansicht eines Lichtleitmittels, das Bestandteil einer Ausführungsform eines optischen Umschaltungssystems ist, und
Fig.3 eine perspektivische Ansicht der geöffneten Rückseite des in Fig. 1 gezeigten Fernsprechapparates mit eingebautem optischen Umschaltungssystem.

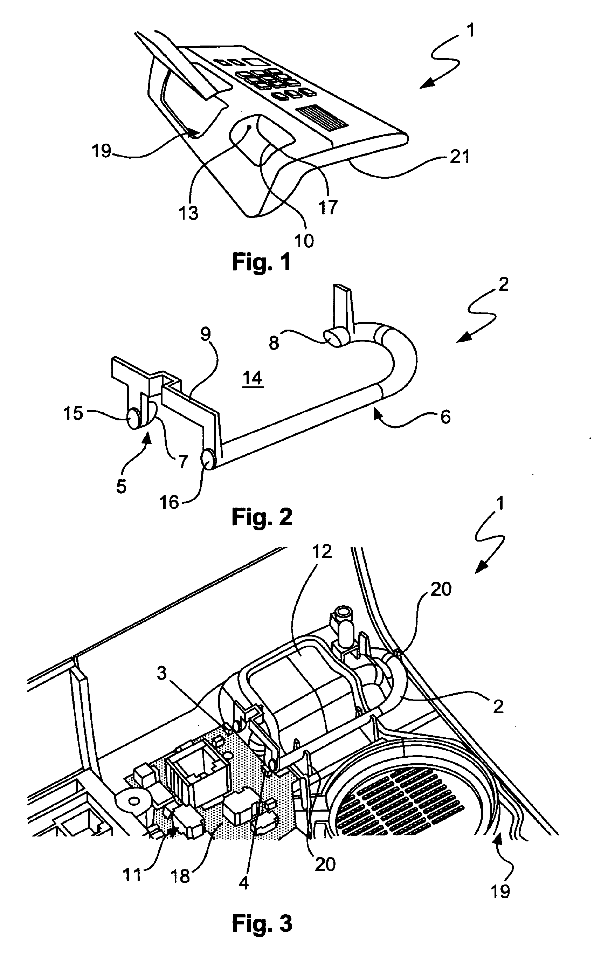

Fig. 1 zeigt eine perspektivische Ansicht einer Ausführungsform eines erfindungsgemäßen Fernsprechapparates 1. Der Fernsprechapparat 1 umfasst eine Hörermulde 10 zur Ablage eines Hörers. Der Hörer selbst ist nicht dargestellt.

Des Weiteren umfasst der Fernsprechapparat 1 ein erfindungsgemäßes optisches Umschaltungssystem, das in dem Fernsprechapparat 1 eingebaut ist.

Das optische Umschaltungssystem umfasst eine Lichtleitmittel 2 zum Leiten von Licht, ein Sendemittel 3 zum Senden von Licht und ein Detektormittel 4 zum Empfangen zumindest eines Teils des vom Sendemittel 3 gesendeten Lichts. Sowohl Lichtleitmittel 2, Sendemittel 3 als auch Detektormittel 4 sind als voneinander getrennte Baueinheiten ausgebildet, die getrennt voneinander in den Fernsprechapparat 1 zur Ausbildung einer Lichtschranke, mit der ein Abnehmen und ein Auflegen des Hörers erkennbar ist, einbaubar sind.

Das Lichtleitmittel 2 umfasst einen ersten Lichtleitabschnitt 5 für das Einleiten des von dem Sendemittel 3 gesendeten Lichts in die Hörermulde 10 des Fernsprechapparates 1 und einen zweiten Lichtleitabschnitt 6 zum Empfangen zumindest eines Teils des durch die Hörermulde 10 gesendeten Lichts und zum Zuführen zumindest eines Teils des empfangenen Lichts zum Detektormittel 4. Sowohl der erste Lichtleitabschnitt 5 als auch der zweite Lichtleitabschnitt 6 sind als starre, strangförmige Vollprofile mit einem kreisförmigen Querschnitt ausgebildet. Das eine Ende des Lichtleitabschnitts 5 bildet eine Austrittsfläche 7, das eine Ende des zweiten Lichtleitabschnitts 6 eine Eintrittsfläche 8 aus, wobei sich die Austrittsfläche 7 und die Eintrittsfläche 8, einen Freiraum 14 für den Hörer belassende, gegenüberliegen. Das andere Ende 15 des ersten Lichtleitabschnitts 5 und das andere Ende 16 des zweiten Lichtleitabschnitts 6 sind auf eine gemeinsame Höhe geführt. Das Lichtleitmittel 2 umfasst eine starre stegförmige Brücke 9, die den ersten Lichtleitabschnitt 5 mit dem zweiten Lichtleitabschnitt 6 verbindet.

Die Fig. 3 zeigt das Lichtleitmittel 2 in seiner eingebauten Position an der Rückseite der Hörermulde 10.

Die Hörermulde 10 weist eine Eintrittsöffnung 13 auf, durch die mittels des ersten Lichtleitabschnittes 5 Licht in die Hörermulde 10 eingeleitet werden kann. Des Weiteren weist die Hörermulde 10 eine Austrittsöffnung 17 (in Figur 1 aufgrund der perspektivischen Ansicht verdeckt) auf, durch die in die Hörermulde 10 eingeleitetes Licht mittels des zweiten Lichtleitabschnitts 6 aufgenommen werden kann. Eintrittsöffnung 13 und Austrittsöffnung 17 sind auf gegenüberliegenden Seiten der Hörermulde 10 vorgesehen.

Der zweite Lichtleitabschnitt 6 ist J-förmig ausgebildet und seitlich um die Hörermulde 10 herum geführt, so dass das eine Ende 15 des ersten Lichtleitabschnitts 5 und das eine Ende 16 des zweiten Lichtleitabschnitts 6 auf einer gemeinsamen Seite der Hörermulde 10 liegen. Das Herumführen des zweiten Lichtleitabschnitts 6 auf eine gemeinsame Seite der Hörermulde 10 ermöglicht in Kombination mit einer elektronischen Baugruppe 11 des Fernsprechapparates eine platzsparende Bauweise. Dem Ende 15 des ersten Lichtleitabschnitts 5 gegenüberliegend ist auf einer Platine 18 der elektronischen Baugruppe 11, hier einer Flachbaugruppe, das Sendemittel 3 in Form einer als SMD-Bauelement ausgebildeten Diode angeordnet, gegenüberliegend dem Ende 16 des zweiten Lichtleitabschnitts 6 ebenfalls auf der Platine 18 der Baugruppe 11 das Detektormittel 4, gleichsam in der Form einer als SMD-Bauelement ausgebildeten Diode. Sendemittel und erster Lichtleitabschnitt 5 sowie Detektormittel 4 und zweiter Lichtleitabschnitt 6 berühren sich nicht, zwischen ihnen befindet sich jeweils ein Luftspalt.

Das Lichtleitmittel 2 ist ein transparentes, thermoplastisches Spritzgussteil aus einem Kunststoff, beispielsweise aus PC (Polycarbonat) oder PMMA (Polymethylmethacrylat). Das Lichtleitmittel 2 ist einteilig und insbesondere einstückig. Das Lichtleitmittel 2 ist als starres Element ausgebildet. Letzteres ist vorteilhaft für den maschinellen Einbau des Lichtleitmittels 2 in den Fernsprechapparat 1.

Die Austrittsfläche 7 des ersten Lichtleitabschnitts 5 und die Eintrittsfläche 8 des zweiten Lichtleitabschnitts 6 sind angeschrägt. Durch das Anschrägen der Austrittsfläche 7 und der Eintrittsfläche 8 kann der Anteil des vom zweiten Lichtleitabschnitt 6 empfangenen Lichts erhöht werden.

Der zweite Lichtleitabschnitt 6 ist um ein Mehrfaches länger als der erste Lichtleitabschnitt 5. Das Sendemittel 3 ist bewusst vor dem kürzeren Lichtleitabschnitt 5 angeordnet. Auch hier hat sich herausgestellt, dass diese Maßnahme die Störunanfälligkeit des Umschaltungssystems, insbesondere was Streulicht anbetrifft, erhöht.

Zum Einbau des Umschaltungssystems wird in einem ersten Schritt das Lichtleitmittel 2 auf der Rückseite der Hörermulde 10 angeordnet. In diesem Ausführungsbeispiel werden durch eine Oberschale 19 des Fernsprechapparates 1 mehrere Aufnahmen 20 ausgebildet, in die das Lichtleitmittel eingelegt wird. Die Aufnahmen halten das Lichtleitmittel 2 bezüglich der Hörermulde 10 in Position.

In einem zweiten Schritt werden das Sendemittel 3 und das Detektormittel 4 auf der elektronischen Baugruppe 11 angeordnet, in diesem Falle mittels eines Lötprozesses. Dieser Schritt kann alternativ auch vor der Anordnung des Lichtleitmittels 2 erfolgen.

Durch Aufsetzen einer Unterschale 21 des Fernsprechapparates 1, siehe Fig. 1, wird das Lichtleitmittel 2 eingeklemmt und fixiert. Andere Befestigungsarten sind ebenfalls möglich. Beispielsweise ist es ebenfalls möglich, das Lichtleitmittel 2 mittels einer Rastverbindung oder einer Schraubverbindung zu befestigen.

Das Lichtleitmittel 2 und das Sendemittel 3 und das Detektormittel 4 werden maschinell im Rahmen eines automatisierten Prozesses in den Fernsprechapparat 1 eingebaut. Alternativ ist es ebenfalls möglich, Lichtleitmittel, Sendemittel 3 und Detektormittel 4 manuell einzubauen.

## Patentansprüche

1. Fernsprechapparat (1) mit einem optischen Umschaltungssystem, einem abnehmbaren Hörer, einer Hörermulde (10) zur Ablage des Hörers, einem Sendemittel (3) zum Senden von Licht und einem Detektormittel (4) zum Empfangen zumindest eines Teils des gesendeten Lichts, wobei die Hörermulde (10) eine Eintrittsöffnung (13) aufweist, durch die Licht in die Hörermulde (10) eingeleitet werden kann, und eine Austrittsöffnung (17) aufweist, durch die in die Hörermulde (10) eingeleitetes Licht aufgenommen werden kann, **dadurch gekennzeichnet, dass** der Fernsprechapparat weiterhin einen Lichtleiter (2) zum Leiten von Licht vom Sendemittel (3) zur Eintrittsöffnung (13) der Hörermulde (10) und/oder von der Austrittsöffnung (17) der Hörermulde (10) zum Detektormittel (4) aufweist, wobei der Lichtleiter (2) und das Sendemittel (3) und/oder das Detektormittel (4) als getrennte Baueinheiten ausgebildet sind, die getrennt voneinander in den Fernsprechapparat (1) zur Ausbildung einer Lichtschranke einbaubar sind, wobei mit der Lichtschranke ein Abnehmen des Hörers erkennbar ist.

2. Fernsprechapparat (1) nach Anspruch 1, wobei der Lichtleiter (2) einen ersten Lichtleitabschnitt (5) für das Einleiten des von dem Sendemittel (3) gesendeten Lichts in die Hörermulde (10) des Fernsprechapparats (1) und einen zweiten Lichtleitabschnitt (6) zum Empfangen zumindest eines Teils des durch die Hörermulde (10) gesendeten Lichts und Zuführen zum Detektormittel (4) aufweist.

3. Fernsprechapparat (1) nach Anspruch 2, wobei der erste Lichtleitabschnitt (5) kürzer ist als der zweite Lichtleitabschnitt (6).

4. Fernsprechapparat (1) nach einem der Ansprüche 2 oder 3, wobei der erste Lichtleitabschnitt (5) und der zweite Lichtleitabschnitt (6) eine Austrittsfläche (7) bzw. eine Eintrittsfläche (8) aufweisen, die einander gegenüberliegend mit einem Freiraum (14) für den Hörer angeordnet sind.

5. Fernsprechapparat (1) nach einem der Ansprüche 2 bis 4, wobei der Lichtleiter (2) eine Brücke (9) aufweist, die den ersten Lichtleitabschnitt (5) mit dem zweiten Lichtleitabschnitt (6) verbindet.

6. Fernsprechapparat (1) nach einem der vorhergehenden Ansprüche, wobei der Lichtleiter (2) einteilig, vorzugsweise einstückig ist.

7. Fernsprechapparat (1) nach einem der vorhergehenden Ansprüche, wobei der Lichtleiter (2) ein Spritzgussteil, vorzugsweise aus einem transparenten Kunststoff, beilspielsweise aus PC (Polycarbonat) oder PMMA (Polymethylmethacrylat), ist.

8. Fernsprechapparat (1) nach einem der vorhergehenden Ansprüche, wobei das Sendemittel (3) und/oder das Detektormittel (4) eine Diode ist

9. Fernsprechapparat (1) nach einem der vorhergehenden Ansprüche, zusätzlich umfassend eine elektronische Baugruppe (11), vorzugsweise eine Flachbaugruppe, wobei das Sendemittel (3) und das Detektormittel (4) Bestandteil der Baugruppe (11) sind.

10. Fernsprechapparat (1) nach einem der Ansprüche 2 bis 9, wobei der Lichtleiter (2) so an der Rückseite (12) der Hörermulde (10) angeordnet ist, dass mittels des ersten Lichtleitabschnitts (5) Licht in die Hörermulde (10) eingeleitet werden kann, und in die Hörermulde (10) eingeleitetes Licht mittels des zweiten Lichtleitabschnitts (6) aufgenommen werden kann, und der zweite Lichtleitabschnitt (6) zur Seite des ersten Lichtleitabschnitts (5) hin um die Hörermulde (10) herum geführt ist, so dass eine Ende (15) des ersten Lichtleitabschnitts (5, 6) und ein Ende (16) des zweiten Lichtleitabschnitts (6) auf einer gemeinsamen Seite der Hörermulde (10) liegen.

11. Fernsprechapparat (1) nach einem der Ansprüche 2 bis 10, wobei zwischen Sendemittel (3) und erstem Lichtleitabschnitt (5) und Detektormittel (4) und zweitem Lichtleitabschnitt (6) jeweils ein Luftspalt vorhanden ist.

12. Verfahren zur Herstellung eines Fernsprechapparates (1) nach einem der Ansprüche 1 bis 11, wobei der Fernsprechapparat (1) zumindest eine elektronische Baugruppe (11) umfasst, **dadurch gekennzeichnet, dass** in einem ersten Schritt der Lichtleiter (2) auf der Rückseite der Hörermulde (10) angeordnet wird, und in einem vom ersten getrennten zweiten Schritt das Sendemittel (3) und/oder das Detektormittel (4) auf der elektronischen Baugruppe (11) angeordnet wird.

## Claims

1. A telephone set (1) comprising an optical switching system, a removable handset, a handset cradle (10) for storing the handset, a transmitter means (3) for transmitting light, and a detector means (4) for receiving at least some of the transmitted light, wherein the handset cradle (10) has an entry opening (13), through which light can be introduced into the handset cradle (10), and an exit opening (17), through which light introduced into the handset cradle (10) can be received, **characterised in that** the telephone set further has an optical waveguide (2) for conducting light from the transmitter means (3) to the entry opening (13) of the handset cradle (10) and/or from the exit opening (17) of the handset cradle (10) to the detector means (4), wherein the optical waveguide (2) and the transmitter means (3) and/or the detector means (4) are formed as separate modular units, which can be installed separately from one another in the telephone set (1) to form a light barrier, wherein a removal of the handset can be identified by means of the light barrier.

2. The telephone set (1) according to Claim 1, wherein the optical waveguide (2) has a first optical waveguide portion (5) for the introduction of the light transmitted by the transmitter means (3) into the handset cradle (10) of the telephone set (1) and a second optical waveguide portion (6) for receiving at least some of the light transmitted through the handset cradle (10) and for feeding said light to the detector means (4).

3. The telephone set (1) according to Claim 2, wherein the first optical waveguide portion (5) is shorter than the second optical waveguide portion (6).

4. The telephone set (1) according to one of Claims 2 or 3, wherein the first optical waveguide portion (5) and the second optical waveguide portion (6) have an exit area (7) and an entry area (8) respectively, which are arranged opposite one another with a space (14) for the handset.

5. The telephone set (1) according to one of Claims 2 to 4, wherein the optical waveguide (2) has a bridge (9), which connects the first optical waveguide portion (5) to the second optical waveguide portion (6).

6. The telephone set (1) according to one of the preceding claims, wherein the optical waveguide (2) is formed in one part, preferably integrally.

7. The telephone set (1) according to one of the preceding claims, wherein the optical waveguide (2) is an injection moulded part, preferably formed from a transparent plastic, for example from PC (polycarbonate) or PMMA (poly(methyl methacrylate)).

8. The telephone set (1) according to one of the preceding claims, wherein the transmitter means (3) and/or the detector means (4) is a diode.

9. The telephone set (1) according to one of the preceding claims, additionally comprising an electronic module (11), preferably a printed circuit module, wherein the transmitter means (3) and the detector means (4) are components of the module (11).

10. The telephone set (1) according to one of Claims 2 to 9, wherein the optical waveguide (2) is arranged on the rear face (12) of the handset cradle (10) such that light can be introduced into the handset cradle (10) by means of the first optical waveguide portion (5), and light introduced into the handset cradle (10) can be received by means of the second optical waveguide portion (6), and the second optical waveguide portion (6) is guided around the handset cradle (10) towards the side of the first optical waveguide portion (5), such that an end (15) of the first optical waveguide portion (5, 6) and an end (16) of the second optical waveguide portion (6) are arranged on a common side of the handset cradle (10).

11. The telephone set (1) according to one of Claims 2 to 10, wherein an air gap is provided between the transmitter means (3) and the first optical waveguide portion (5) and between the detector means (4) and the second optical waveguide portion (6).

12. A method for producing a telephone set (1) according to one of Claims 1 to 11, wherein the telephone set (1) comprises at least one electronic module (11), **characterised in that**, in a first step, the optical waveguide (2) is arranged on the rear face of the handset cradle (10), and, in a second step separate from the first step, the transmitter means (3) and/or the detector means (4) is arranged on the electronic module (11).

## Revendications

1. Poste téléphonique (1) avec un système de commutation optique, un écouteur amovible, une cavité d'écouteur (10) pour poser l'écouteur, un moyen d'émission (3) pour émettre de la lumière, et un moyen de détection (4) pour recevoir au moins une partie de la lumière émise, dans lequel la cavité d'écouteur (10) comporte une ouverture d'entrée (13), à travers laquelle de la lumière peut être guidée dans la cavité d'écouteur (10), et une ouverture de sortie (17), à travers laquelle la lumière guidée dans la cavité d'écouteur (10) peut être reçue, **caractérisé en ce que** le poste téléphonique comporte en outre un guide de lumière (2) pour guider la lumière du moyen d'émission (3) vers l'ouverture d'entrée (13) de la cavité d'écouteur (10) et/ou de l'ouverture de sortie (17) de la cavité d'écouteur (10) vers le moyen de détection (4), dans lequel le guide de lumière (2) et le moyen d'émission (3) et/ou le moyen de détection (4) sont conçus comme des unités de construction séparées, aptes à être installées séparément les uns des autres dans le poste téléphonique (1) pour former une barrière photoélectrique, dans lequel la barrière photoélectrique permet de détecter le décrochement de l'écouteur.

2. Poste téléphonique (1) selon la revendication 1, dans lequel le guide de lumière (2) comporte une première partie de guide de lumière (5) pour l'introduction de la lumière émise par le moyen d'émission (3) dans la cavité d'écouteur (10) du poste téléphonique (1), ainsi qu'une deuxième partie de guide de lumière (6) pour la réception d'au moins une partie de la lumière émise à travers la cavité d'écouteur (10) et le guidage vers le moyen de détection (4) .

3. Poste téléphonique (1) selon la revendication 2, dans lequel la première partie de guide de lumière (5) est plus courte que la deuxième partie de guide de lumière (6).

4. Poste téléphonique (1) selon l'une des revendications 2 à 3, dans lequel la première partie de guide de lumière (5) et la deuxième partie de guide de lumière (6) comportent une surface de sortie (7) ou une surface d'entrée (8) agencées l'une en face de l'autre, avec un espace libre (14) pour l'écouteur.

5. Poste téléphonique (1) selon l'une des revendications 2 à 4, dans lequel le guide de lumière (2) comporte un pont (9) reliant la première partie de guide de lumière (5) à la deuxième partie de guide de lumière (6).

6. Poste téléphonique (1) selon l'une des revendications précédentes, dans lequel le guide de lumière (2) est conçu en une seule partie, de préférence en une seule pièce.

7. Poste téléphonique (1) selon l'une des revendications précédentes, dans lequel le guide de lumière (2) est une pièce moulée par injection, de préférence à partir d'une matière plastique transparente, par exemple du PC (polycarbonate) ou du PMMA (polyméthylméthacrylate).

8. Poste téléphonique (1) selon l'une des revendications précédentes, dans lequel le moyen d'émission (3) et/ou le moyen de détection (4) est une diode.

9. Poste téléphonique (1) selon l'une des revendications précédentes, comprenant en outre un bloc électronique (11), de préférence un bloc plat, dans lequel le moyen d'émission (3) et le moyen de détection (4) font partie du bloc (11).

10. Poste téléphonique (1) selon l'une des revendications 2 à 9, dans lequel le guide de lumière (2) est agencé de telle façon contre le côté arrière (12) de la cavité d'écouteur (10), que la première partie de guide de lumière (5) peut introduire de la lumière dans la cavité d'écouteur (10), et la lumière introduite dans la cavité d'écouteur (10) peut être reçue au moyen de la deuxième partie de guide de lumière (6), et la deuxième partie de guide de lumière (6) entoure la cavité d'écouteur (10) du côté de la première partie de guide de lumière (5), de sorte qu'une extrémité (15) de la première partie de guide de lumière (5, 6) et une extrémité (16) de la deuxième partie de guide de lumière (6) se trouvent du même côté de la cavité d'écouteur (10).

11. Poste téléphonique (1) selon l'une des revendications 2 à 10, dans lequel un espace d'air est prévu respectivement entre le moyen d'émission (3) et la première partie de guide de lumière (5) et le moyen de détection (4) et la deuxième partie de guide de lumière (6).

12. Procédé pour la fabrication d'un poste téléphonique (1) selon l'une des revendications 1 à 11, dans lequel le poste téléphonique (1) comprend au moins un bloc électronique (11), **caractérisé en ce que** dans une première étape, le guide de lumière (2) est installé à l'arrière de la cavité d'écouteur (10), et le moyen d'émission (3) et/ou le moyen de détection (4) est monté sur le bloc électronique dans une deuxième étape séparée de la première.
